# EUROPEAN PATENT SPECIFICATION

(11) **EP 3 225 005 B1**
(45) Date of publication and mention of the grant of the patent: **30.12.2020**
(21) Application number: 14907072.4
(22) Date of filing: 26.11.2014
(51) Int. Cl.: H04L 29/06, H04L 29/12, H04L 12/26, H04L 29/08

(54) **DATA COMMUNICATION USING A PREFERRED TRANSFER MODE**
DATENKOMMUNIKATION MIT VERWENDUNG EINES BEVORZUGTEN TRANSFERMODUS
COMMUNICATION DE DONNÉES AU MOYEN D'UN MODE DE TRANSFERT PRÉFÉRÉ

(43) Date of publication of application: 04.10.2017
(73) Proprietor: Hewlett-Packard Development Company, L.P., Spring TX 77389 (US)
(72) Inventor: CHANG, Han-Kuang, Taipei City 11568 (TW); HSIEH, Yi Kang, Taipei City 11568 (TW); HUANG, Chih-Ming, Taipei City 242 (TW); GERTEN, Leo, Taipei City 11568 (TW)
(74) Representative: Stöckeler, Ferdinand
(86) International application number: PCT/US2014/067645
(87) International publication number: WO 2016/085496

(56) References cited:
- US-A1- 2002 080 721
- US-A1- 2002 099 844
- US-A1- 2005 105 530
- US-A1- 2006 155 864
- US-A1- 2008 313 351
- US-A1- 2012 151 075
- Qualcomm: "A 3G/LTE Wi-Fi Offload Framework: Connectivity Engine (CnE) to Manage Inter-System Radio Connections and Applications", , 1 June 2011 (2011-06-01), XP055051075, Retrieved from the Internet: URL:http://www.qualcomm.com/media/document s/files/qualcomm-research-3g-lte-wifi-offl oad-framework.pdf [retrieved on 2013-01-24]
- HUAWEI ET AL: "Remove 24.234 from WLAN selection procedures", 3GPP DRAFT; C1-140760_REMOVE 24 234 FROM WLAN SELECTION PROCEDURES_24302_REL12, 3RD GENERATION PARTNERSHIP PROJECT (3GPP), MOBILE COMPETENCE CENTRE ; 650, ROUTE DES LUCIOLES ; F-06921 SOPHIA-ANTIPOLIS , vol. CT WG1, no. Guangzhou; 20140120 - 20140124 24 January 2014 (2014-01-24), XP050731188, Retrieved from the Internet: URL:http://www.3gpp.org/ftp/Meetings_3GPP_ SYNC/CT/CT1/updates/update12/ [retrieved on 2014-01-24]

## Description

### BACKGROUND

Various data communication applications and technologies exist for transferring data between electronic devices. In some instances, a data transfer route between electronic devices may include one or more segments that utilize a wireless communication technology. Additionally, the speed and/or throughput of a wireless communication technology may be inversely correlated with the range of the wireless communication technology.

### BRIEF DESCRIPTION OF THE DRAWINGS

Various examples will be described below with reference to the following figures.
FIG. 1 is a block diagram of a device for performing a data communication using a preferred transfer mode according to an example implementation.
FIG. 2 is a block diagram of a device for performing a data communication using a preferred transfer mode according to another example implementation.
FIG. 3 is a block diagram of a device that includes a machine-readable medium encoded with instructions to perform a data communication using a preferred transfer mode according to an example implementation.
FIG. 4 is a block diagram of a device that includes a machine-readable medium encoded with instructions to perform a data communication using a preferred transfer mode according to another example implementation.
FIG. 5 is a flow diagram of a method for performing a data communication using a preferred transfer mode according to an example implementation.
FIG. 6 is a flow diagram of a method for performing a data communication using a preferred transfer mode according to another example implementation.

### DETAILED DESCRIPTION

Various data communication applications and technologies exist for communicating between electronic devices, some of which may be devices of a mesh network and/or a cloud-based platform. User satisfaction with a data communication operation, such as uploading or downloading a file from cloud-based storage, may depend on various factors, such as a speed of the operation, a duration of the operation, and a completion success rate, among others. Document Qualcomm: "A 3G/LTE Wi-Fi Offload Framework: Connectivity Engine (CnE) to Manage Inter-System Radio Connections and Applications", 1 June 2011 (2011-06-01), discloses an improved network selection based on an operator's policy.

Some data transfer routes for communicating between devices may include one or more segments that utilize a slower wireless communication technology (e.g., 3G mobile telecommunications), which may cause a data throughput bottleneck, reduce overall data transfer speed of the route, and ultimately reduce user satisfaction. Also, the speed and/or throughput of a wireless communication technology may be inversely correlated with the range of the wireless communication technology, which may impact route planning, data transfer speed, and the likelihood of successful completion of a data communication operation (e.g., an ongoing data communication operation may fail if a mobile device involved in the data communication operation travels outside the range associated with the data transfer).

Additionally, data transfer over the data transfer route is generally coordinated by applications (i.e., machine-readable instructions executable by a processor), such as File Transfer Protocol (FTP) applications, HyperText Transfer Protocol (HTTP) applications, and applications using Wi-Fi Direct™. Some applications may be compatible only with certain data transfer routes. Even if a data transfer route can support different applications, some applications may have different capabilities than other applications in some respects, such as speed and error handling.

For example, a wireless peer-to-peer data transfer between devices, such as a Wi-Fi Direct™-based transfer over the IEEE 802.11ac wireless standard, can transfer data at a throughput of approximately 50 MB/s or greater, within a range of approximately 10 meters. As another example, FTP can transfer data between devices on a personal wireless local network (e.g., devices that are connected through an access point using the IEEE 802.11n wireless standard), at a data throughput of approximately 20 MB/s or greater and over a range of 100 meters. As another example, HTTP can transfer data between devices over a route that is at least partially conducted over mobile telecommunications (e.g., a 3G mobile telecommunications) and/or includes third-party server nodes (e.g., the Internet), at a data throughput of less than approximately 2 MB/s and over a potentially unlimited range. Additionally, in some circumstances, FTP may be faster than HTTP in some respects, owing to, for example, lower protocol overhead (e.g., smaller or no package headers accompanying FTP data transfers), driver-based FTP acceleration and optimization, and other efficiencies.

Accordingly, it may be useful for devices to automatically identify a preferred transfer mode (e.g., an application operating over a particular route or network architecture) for performing a robust and high speed data transfer between devices.

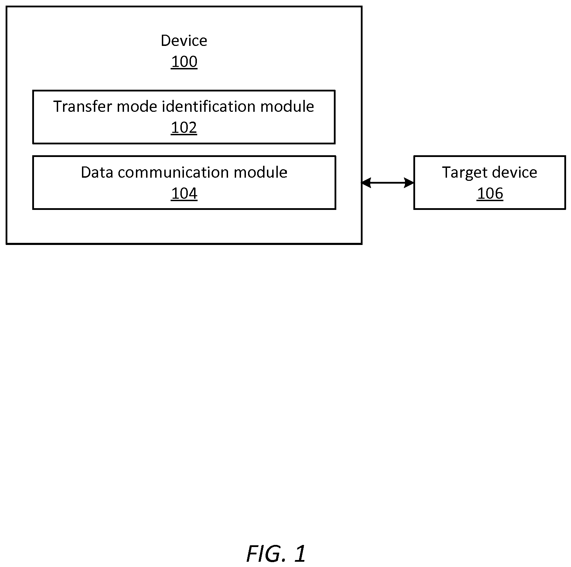

FIG. 1 is a block diagram of a device 100 for performing a data communication using a preferred transfer mode according to an example implementation. The device 100 can include a transfer mode identification module 102 and a data communication module 104. A module can include a set of instructions encoded on a machine-readable medium and executable by a processor of the device. Additionally or alternatively, a module can include a hardware device comprising electronic circuitry for implementing the functionality described below. The device 100 can also include one or more wired or wireless electronic communication technologies, such as Ethernet, USB, optical fiber, the IEEE 1394 standards (FireWire®), the IEEE 802.11 standards (Wi-Fi®), Bluetooth® or low-energy Bluetooth®, ZigBee®, infrared communications, mobile telecommunications (also known as cellular telecommunications), satellite communications, near-field communications, and/or other short or long-range radio communications.

The transfer mode identification module 102 can identify a preferred transfer mode that is available for communicating between the device 100 and a target device 106, from among a plurality of priority-ordered transfer modes that includes a peer-to-peer mode, an FTP mode, and an HTTP mode. The transfer modes can be priority-ordered, in that each of the transfer modes can be assigned an order of priority in the transfer mode identification module 102, and, in some example implementations, the order of priority of the transfer modes can be, from highest priority to lowest priority, the peer-to-peer mode, the FTP mode, and the HTTP mode. In some example implementations, the order of priority can be based on aspects of the transfer modes such as throughput, bandwidth, connectivity range, or the like.

Additionally, in some example implementations, the transfer mode identification module 102 can be configured to test the availability of the transfer modes by executing a service discovery protocol or by attempting to communicate between the device 100 and the target device 106 using the transfer mode to be tested. Moreover, in some example implementations, the transfer mode identification module 102 can be configured to test the availability of the priority-ordered transfer modes in a sequential manner and to select the first transfer mode tested to be available (in other words, determined to be available) to be the preferred transfer mode, while in other example implementations, the transfer mode identification module 102 can be configured to test the availability of the transfer modes in a simultaneous manner and to select the highest priority transfer mode tested to be available to be the preferred transfer mode. Accordingly, the preferred transfer mode can be identified by the transfer mode identification module 102 as a transfer mode that is available for communicating between the device 100 and the target device 106 that also has a high priority (or in some implementations, a highest priority).

The data communication module 104 can perform a data communication with the target device 106 using a preferred transfer mode (e.g., a preferred transfer mode identified by the transfer mode identification module 102). In some example implementations, the data communication can be a data backup operation, a data synchronization operation, a file browsing operation, a file sharing operation, or other data operation. In some example implementations, the data communication can be part of or associated with a cloud computing operation, such as access to cloud-based storage, services, infrastructure, or computing platforms.

In some example implementations, a transfer mode, as referred to herein, can include an application (i.e., instructions encoded on a machine-readable medium and executable by a processor) that performs a data communication between the device 100 and the target device 106 over a particular network architecture. Example implementations of the transfer modes (e.g., the peer-to-peer mode, the FTP mode, and the HTTP mode) will now be discussed.

In some example implementations, the peer-to-peer mode can facilitate direct data communication between the device 100 and the target device 106, without an intermediary device. For example, the peer-to-peer mode can comprise an application that is executed by the data communication module 104 to perform a data communication between the device 100 and the target device 106 using a peer-to-peer wireless communication technology such as Wi-Fi Direct@, Bluetooth®, ZigBee®, infrared data transfer, near-field communications, or the like.

In some example implementations, the FTP mode can include an FTP application (that is, an application that utilizes the File Transfer Protocol) that is executed by the data communication module 104 to perform the data communication between the device 100 and the target device 106 over a local network. In some example implementations, the local network can include at least one wireless access point (e.g., operating on an IEEE 802.11 -family standard). In some example implementations, the local network can communicate data between the device 100 and the target device 106 without routing data through the Internet.

In some example implementations, the HTTP mode can include an HTTP application (that is, an application that utilizes the HyperText Transfer Protocol) that is executed by the data communication module 104 to perform the data communication between the device 100 and the target device 106 by way of mobile telecommunications (e.g., a 3G or 4G mobile telecommunications), a mobile access gateway, a third-party server node, and/or the Internet.

In some example implementations, each of the plurality of priority-ordered transfer modes (i.e., the peer-to-peer mode, the FTP mode, and the HTTP mode) can include at least one wireless communication technologies, such as those described above (e.g., a IEEE 802.11-family standard, mobile telecommunications, Bluetooth®, or the like), for communicating between the device 100 and the target device 106. Some wireless communication technologies are faster than other wireless communication technologies. Accordingly, by virtue of the transfer mode identification module 102 and the data communication module 104, the device 100 can perform high throughput data communications with the target device 106.

In some example implementations, the device 100 and/or the target device 106 can be a laptop computer, a desktop computer, a workstation, a mobile phone, a tablet computing device, a wearable computing device, a server, a network attached storage, a personal cloud storage, or other electronic device. In some example implementations, the device 100 and/or the target device 106 can be nodes of a mesh network, and the nodes of the mesh network can be analogous (e.g., have functions and/or components similar to) to the device 100. For example, the target device 106 can be analogous to the device 100, such that the target device 106 also includes a transfer mode identification module and a data communication module. By virtue of the mesh network having nodes that are analogous to device 100, each node of the mesh network can be capable of identifying the highest throughput path to other nodes in the mesh network and a mesh network routing algorithm can determine the highest throughput route between route endpoints of the mesh network.

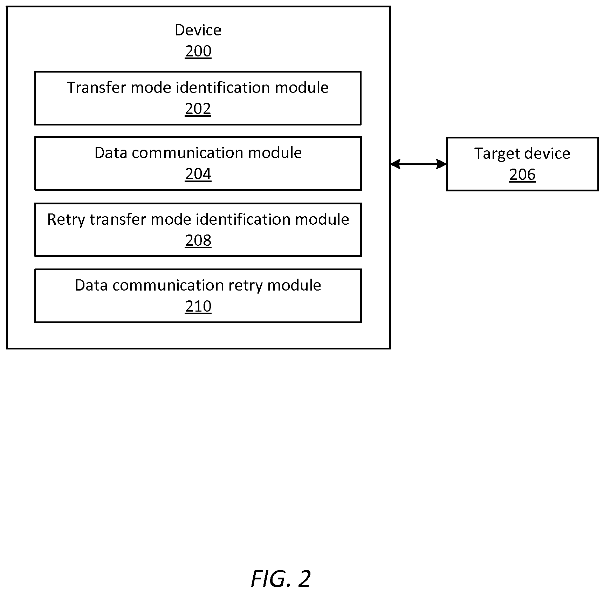

FIG. 2 is a block diagram of a device 200 for performing a data communication using a preferred transfer mode according to another example implementation. The device 200 can include a transfer mode identification module 202, a data communication module 204, a retry transfer mode identification module 208, and a data communication retry module 210. A module can include a set of instructions encoded on a machine-readable medium and executable by a processor of the device. Additionally or alternatively, a module can include a hardware device comprising electronic circuitry for implementing the functionality described below. As with the device 100, the device 200 can also include one or more wired or wireless electronic communication technologies, such as Ethernet, USB, optical fiber, the IEEE 1394 standards (e.g., FireWire®), the IEEE 802.11 standards (Wi-Fi®), Bluetooth® or low-energy Bluetooth®, ZigBee®, infrared communications, mobile telecommunications, satellite communications, near-field communications, and/or other short or long-range radio communications.

The transfer mode identification module 202 and the data communication module 204 can be analogous in many respects to the transfer mode identification module 102 and the data communication module 104, respectively, of the device 100.

As with the transfer mode identification module 102, the transfer mode identification module 202 can identify a preferred transfer mode that is available for communicating between the device 200 and a target device 206, from among a plurality of priority-ordered transfer modes that includes a peer-to-peer mode, an FTP mode, and an HTTP mode. The peer-to-peer mode, FTP mode, and HTTP mode can be analogous to the respective transfer modes described above with respect to FIG. 1. In some example implementations, the transfer mode identification module 202 can retry identifying a preferred transfer mode if no transfer modes are tested to be available.

As with the data communication module 104, the data communication module 204 can perform a data communication with the target device 206 using the preferred transfer mode identified by the transfer mode identification module 202.

In some cases, the data communication performed by the data communication module 204 may be interrupted. For example, while the data communication is being performed using the preferred transfer mode identified by the transfer mode identification module 202, a timeout of the preferred transfer mode may interrupt the data communication. A timeout can occur, for example, when the device 200 and/or the target device 206 move out of a connectivity range of the preferred transfer mode, or when the device 200 and/or the target device 206 becoming unresponsive. When the data communication has been interrupted, the retry transfer mode identification module 208 can identify a preferred retry transfer mode available for communicating with the target device 206, from among the plurality of priority-ordered transfer modes.

The data communication retry module 210 can retry at least part of the interrupted data communication using the preferred retry transfer mode identified by the retry transfer mode identification module 208. For example, the data communication retry module 210 can continue the data communication from the point of interruption.

As with the device 100 and the target device 106, the device 200 and the target device 206 also can be a laptop computer, a desktop computer, a workstation, a mobile phone, a tablet computing device, a wearable computing device, a server, a network attached storage, a personal cloud storage, or other electronic device, and the device 200 and/or the target device 206 also can be nodes of a mesh network.

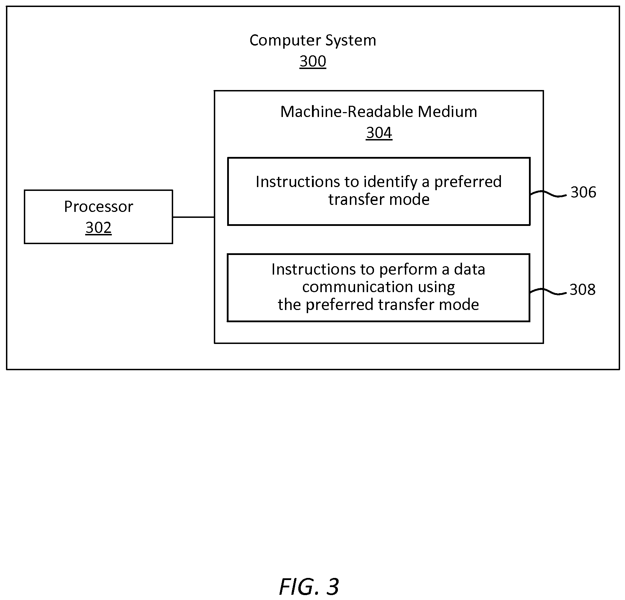

FIG. 3 is a block diagram of a computer system 300 that includes a machine-readable medium encoded with instructions to perform a data communication according to an example implementation. In some example implementations, computer system 300 can be a laptop computer, a desktop computer, a workstation, a mobile phone, a tablet computing device, a wearable computing device, a server, a network attached storage, a personal cloud storage, or other electronic device. The computer system 300 can include a processor 302 coupled to a machine-readable medium 304. In some example implementations, the computer system 300 can serve as or form part of the device 100 or the target device 106 of FIG. 1.

The processor 302 can include a central processing unit, a multiple processing unit, a microprocessor, an application-specific integrated circuit, a field programmable gate array, and/or other hardware device suitable for retrieval and/or execution of instructions from the machine-readable medium 304 (e.g. instructions 306 and 308) to perform the various functions discussed herein. Additionally or alternatively, the processor 302 can include electronic circuitry for performing the functionality of instructions 306 and/or 308.

The machine-readable medium 304 can be any medium suitable for storing executable instructions, such as random access memory (RAM), electrically erasable programmable read-only memory (EEPROM), flash memory, hard disk drives, optical discs, and the like. In some example implementations, the machine-readable medium 304 can be a non-transitory medium, where the term "non-transitory" does not encompass transitory propagating signals. As described further herein below, the machine-readable medium 304 can be encoded with a set of executable instructions 306 and 308.

Instructions 306 can identify a preferred transfer mode available for communicating with a target device, from among a plurality of priority-ordered transfer modes that includes, in order from highest priority to lowest priority, a peer-to-peer mode (e.g., an application transferring data using Wi-Fi Direct@ or the like), an FTP mode, and an HTTP mode, although other orders of priority can also be used. The peer-to-peer mode, FTP mode, and HTTP mode can be analogous to the respective transfer modes described above with respect to FIG. 1.

Instructions 308 can perform a data communication (such as, for example, a data backup, a data synchronization, a file sharing, a file browsing, a cloud computing operation, and the like) with the target device using the preferred transfer mode (e.g., the preferred transfer mode identified by instructions 304).

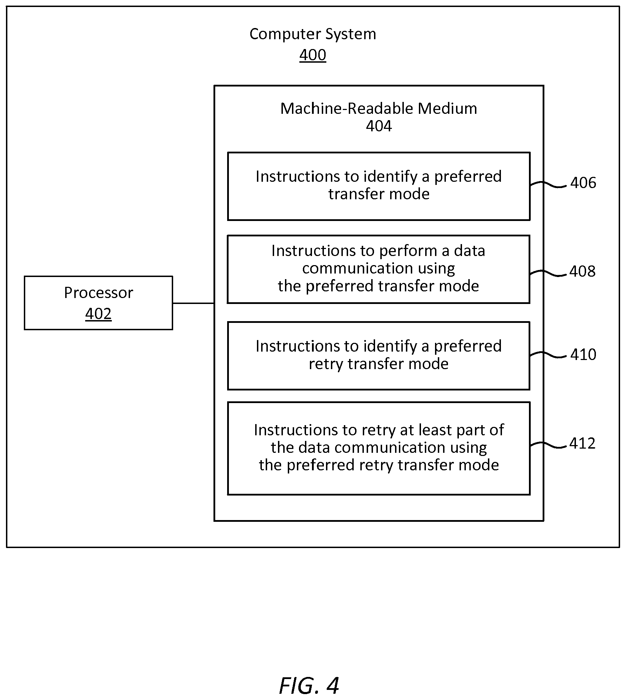

FIG. 4 is a block diagram of a computer system 400 that includes a machine-readable medium encoded with instructions to perform a data communication according to another example implementation. In some example implementations, computer system 400 can be a laptop computer, a desktop computer, a workstation, a mobile phone, a tablet computing device, a wearable computing device, a server, a network attached storage, a personal cloud storage, or other electronic device. In some example implementations, the computer system 400 can serve as or form part of the device 200 or the target device 206 of FIG. 2.

The computer system 400 can include a processor 402 coupled to a machine-readable medium 404, and the processor 402 and the machine-readable medium 404 can be analogous in many respects to the processor 302 and the machine-readable medium 304, respectively. The machine-readable medium 404 can be encoded with a set of executable instructions 406, 408, 410, and 412. Additionally or alternatively, the processor 402 can include electronic circuitry for performing the functionality of instructions 406, 408, 410, and/or 412.

Instructions 406 can identify a preferred transfer mode for communicating with a target device in a manner analogous to that described with respect to instructions 306 stored on the machine-readable medium 304. Instructions 408 can perform a data communication with the target device in a manner analogous to that described with respect to instructions 308 stored on the machine-readable medium 304.

Instructions 410 can identify a preferred retry transfer mode available for communicating with the target device from among the plurality of priority-ordered transfer modes, when the data communication (e.g., the data communication performed by instructions 408) is interrupted, for example, by a timeout of the preferred transfer mode. Instructions 412 can retry at least part of the interrupted data communication using the preferred retry transfer mode (e.g., the preferred retry transfer mode identified by instructions 410). In some example implementations, instructions 410 and 412 can include a counter which limits the number of times the instructions 410 and 412 are performed in response to interruptions of a particular data communication. When the counter reaches the limit, the processor 402 can generate an alert indicating that the data communication cannot be completed. In other words, in some example implementations, an interrupted data communication can be retried a limited number of times.

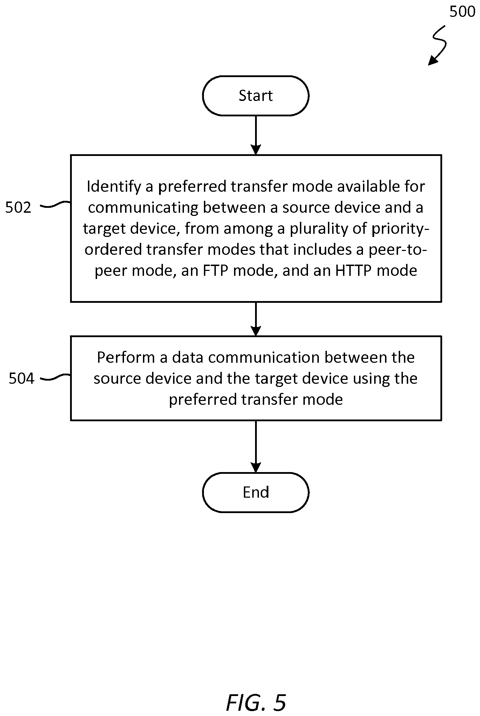

FIG. 5 is a flow diagram of a method 500 for performing a data communication using a preferred transfer mode according to an example implementation. The method 500 can be implemented in the form of executable instructions stored on a machine-readable medium and/or in the form of electronic circuitry.

Although execution of the method 500 is described below with reference to the processor 302 of FIG. 3, it should be understood that execution of the method 500 can be performed by other suitable devices, such as the device 100 and/or the target device 106 of FIG. 1, the device 200 and/or the target device 206 of FIG. 2, and the processor 402 of FIG. 4.

The method 500 starts, and at block 502, the processor 302 can identify a preferred transfer mode available for communicating between a source device and a target device, from among a plurality of priority-ordered transfer modes that can include a peer-to-peer mode, an FTP mode, and an HTTP mode. For example, each of the transfer modes can be assigned an order of priority, which, in some example implementations, can be based on an aspect of the transfer modes, such as throughput, bandwidth, connectivity range, latency, or the like. More particularly, in some example implementations, the order of priority of the priority-ordered transfer modes can be, from highest priority to lowest priority, the peer-to-peer mode, the FTP mode, and the HTTP mode, although other orders of priority can also be used. The peer-to-peer mode, FTP mode, and HTTP mode can be analogous to the respective transfer modes described above with respect to FIG. 1.

To perform block 502, the processor 302 can identify, as the preferred transfer mode, a transfer mode that has a high order of priority (or, in other example implementations, the highest order of priority) and also is available for communicating between the source device and the target device. The availability of a transfer mode can be tested by the processor 302 by executing a service discovery protocol or by attempting to communicate between the source device and the target device using the transfer mode being tested, for example. The transfer mode identified as having a high order of priority and as being available for communicating between the source device and the target device can be deemed to be the preferred transfer mode.

In block 504, the processor 302 performs a data communication between the source device and the target device using the preferred transfer mode identified in block 502. For example, the data communication can be a data backup operation, a data synchronization operation, a file browsing operation, a file sharing operation, a cloud computing operation, or other data operation. Additionally, the data communication can include one-way or two-way communications between the source device and the target device. In some example implementations, the source device and/or the target device can be a cloud device.

In some example implementations, the source device and/or the target device can be nodes of a mesh network, and the data communication between the source device and the target device can relay data as part of a multi-hop route.

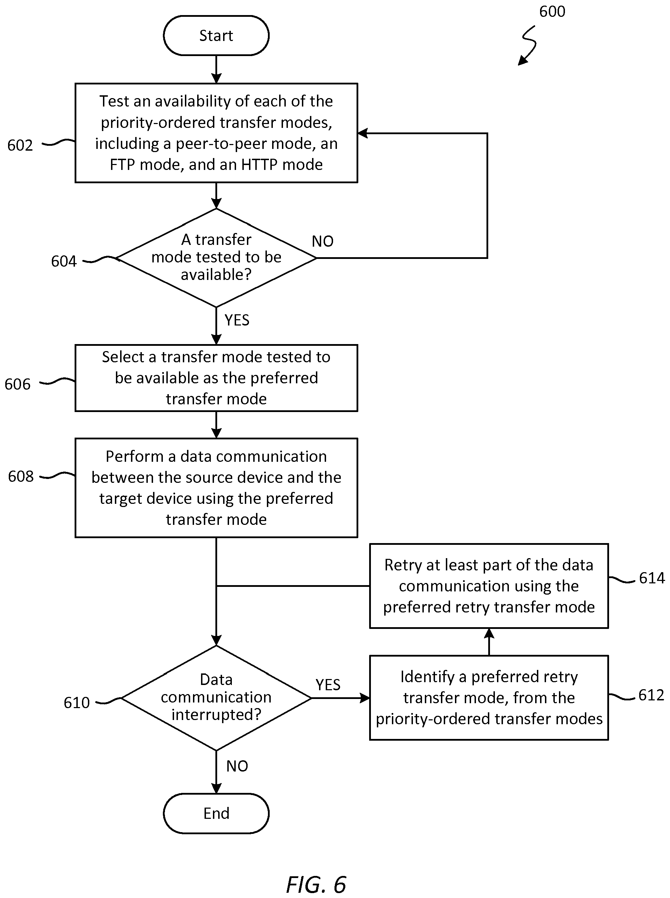

FIG. 6 is a flow diagram of a method 600 for performing a data communication using a preferred transfer mode according to another example implementation. The method 600 can be implemented in the form of executable instructions stored on a machine-readable medium and/or in the form of electronic circuitry.

Although execution of the method 600 is described below with reference to the processor 402 of FIG. 4, it should be understood that execution of the method 600 can be performed by other suitable devices, such as the device 100 and/or the target device 106 of FIG. 1, the device 200 and/or the target device 206 of FIG. 2, and the processor 302 of FIG. 3.

The method 600 starts, and at block 602, the processor 402 can test an availability of a plurality of priority-ordered transfer modes for communicating between the source device and the target device. As described above with reference to method 500, the plurality of priority-ordered transfer modes can include a peer-to-peer mode, an FTP mode, and an HTTP mode, and each of the transfer modes can be assigned an order of priority. More particularly, in some example implementations, the order of priority of the priority-ordered transfer modes can be, from highest priority to lowest priority, the peer-to-peer mode, the FTP mode, and the HTTP mode, although other orders of priority can also be used. In some example implementations, the processor 402 tests the availability of the transfer modes by executing a service discovery protocol or by attempting to communicate between the source device and the target device using the transfer mode being tested, for example.

More particularly, in some example implementations, the processor 402 can perform block 602 by testing simultaneously the availability of each of the priority-ordered transfer modes for communicating between the source device and the target device.

In other example implementations, the processor 402 can perform block 602 by testing the availability of the priority-ordered transfer modes sequentially, in order from highest priority to lowest priority, or more particularly, by testing the availability of the priority-ordered transfer modes sequentially until a first transfer mode is tested to be available. For example, the processor 402 can test first whether the peer-to-peer mode is available. If the peer-to-peer mode is available, then block 602 ends and the method 600 proceeds to block 604; if the peer-to-peer mode is not available, then block 602 continues and the processor 402 can test whether the FTP mode is available. If the FTP mode is available, then block 602 ends and the method 600 proceeds to block 604; if the FTP mode is not available, then block 602 continues and the processor 402 can test whether the HTTP mode is available, after which the method proceeds to block 604.

In block 604, the processor 402 checks whether at least one transfer mode was tested to be available in block 602. If no transfer modes were tested to be available in block 602 ("NO" at block 604), then the method 600 can retry block 602. In some example implementations, the processor 402 can retry block 602 a limited number of times, and if no transfer modes are tested to be available after the limit has been reached, then the processor 402 can generate an alert indicating that communications cannot be established between the source device and the target device.

If at least one transfer mode was tested to be available in block 602 ("YES" at block 604), then the method 600 proceeds to block 606. In block 606, the processor 402 can select a transfer mode tested to be available in block 602 to be the preferred transfer mode.

More particularly, in the example implementations where the testing in block 602 is performed simultaneously, the processor 402 selects a high priority transfer mode tested to be available in block 602 (or, in some implementations, a highest priority transfer mode tested to be available in block 602) to be the preferred transfer mode. For example, the processor 602 can select the highest priority one of the transfer modes tested to be available in block 602 to be the preferred transfer mode, according to the order of priority of the transfer modes (e.g. from highest priority to lowest priority: the peer-to-peer mode, the FTP mode, and the HTTP mode).

In the example implementations where the testing in block 602 is performed sequentially, the processor 402 selects the first transfer mode tested to be available in the testing to be the preferred transfer mode. By virtue of the sequential testing, the first transfer mode tested to be available can be logically deemed to be the highest priority transfer mode available.

In block 608, the processor 402 performs a data communication between the source device and the target device using the preferred transfer mode selected in block 606. Block 608 can be analogous in many respects to block 504 of the method 500. As described above with respect to method 500, in some example implementations, the source device and/or the target device can be nodes of a mesh network, and the data communication between the source device and the target device can relay data as part of a multi-hop route.

In block 610, the processor 402 checks whether the data communication in block 608 was interrupted, for example, by a timeout of the preferred transfer mode. A timeout can occur for a number of reasons, such as the source device and/or the target device moving out of a connectivity range of the preferred transfer mode or one or both of the source device and the target device becoming unresponsive. If the data communication of block 608 is not interrupted by a timeout of the preferred transfer mode ("NO" at block 610), then the data communication can complete, and the method 600 ends.

If the data communication in block 608 is interrupted ("YES" at block 610), then the method 600 proceeds to block 612.

In block 612, the processor 402 identifies a preferred retry transfer mode available for communicating between the source device and the target device, from among the plurality of priority-ordered transfer modes. In some example implementations, the processor 402 identifies the preferred retry transfer mode in block 612 in a manner analogous to the process described in blocks 602, 604, and 606 for identifying the preferred transfer mode in the first instance. In other words, in block 612, the processor 402 can test the availability of the priority-ordered transfer modes and select a high priority transfer mode tested to be available (or more particularly, a highest priority transfer mode tested to be available) as the preferred retry transfer mode.

In block 614, the processor 402 can retry at least part of the interrupted data communication using the preferred retry transfer mode identified in block 612. In some example implementations, the processor 402 can limit the number of times it performs blocks 612 and 614 in response to an interruption of the data communication. If the data communication is interrupted after the processor 402 has reached the limit, then the processor 402 can generate an alert indicating that the data communication cannot be completed.

In view of the foregoing description, it can be appreciated that the performance of a data communication between electronic devices, such as a data backup operation, a data synchronization operation, a file browsing operation, a file sharing operation, a cloud computing operation, or the like, can be improved. More particularly, by virtue of example implementations of the present application, the data communication can be performed with data high throughput and in a manner that is robust to interruptions.

In the foregoing description, numerous details are set forth to provide an understanding of the subject disclosed herein. It is intended that the following claims limit the scope of the present invention.

## Claims

1. A method comprising:
identifying, by a processor, a preferred transfer mode available for communicating between a source device and a target device, from among a plurality of priority-ordered transfer modes that includes a peer-to-peer mode, an FTP mode, and an HTTP mode, wherein said preferred transfer mode is a highest priority transfer mode tested to be available; and
performing, by the processor, a data communication between the source device and the target device using the preferred transfer mode,
in a case where the data communication is interrupted, identifying, by the processor, a preferred retry transfer mode available for communicating between the source device and the target device, from among the plurality of priority-ordered transfer modes, and retrying, by the processor, at least part of the data communication using the preferred retry transfer mode.

2. The method of claim 1, wherein an order of priority of the priority-ordered transfer modes, from highest priority to lowest priority, is the peer-to-peer mode, the FTP mode, and the HTTP mode.

3. The method of claim 1, wherein the identifying includes:
testing an availability of the priority-ordered transfer modes for communicating between the source device and the target device, the testing being performed sequentially on the priority-ordered transfer modes in order from highest priority to lowest priority;
selecting a first transfer mode tested to be available in the testing to be the preferred transfer mode; and
retrying the testing in a case where no transfer modes are tested to be available in the testing.

4. The method of claim 1, wherein the identifying includes:
testing simultaneously an availability of the priority-ordered transfer modes for communicating between the source device and the target device;
selecting a highest priority one of transfer modes tested to be available in the testing to be the preferred transfer mode; and
retrying the testing in a case where no transfer modes are tested to be available in the testing.

5. The method of claim 1, wherein the source device, the target device, or both the source device and the target device are nodes of a mesh network.

6. A device comprising:
a transfer mode identification module to identify a preferred transfer mode available for communicating with a target device, from among a plurality of priority-ordered transfer modes that includes a peer-to-peer mode, an FTP mode, and an HTTP mode, wherein said preferred transfer mode is a highest priority transfer mode tested to be available; and
a data communication module to perform a data communication with the target device using the preferred transfer mode,
a retry transfer mode identification module to identify a preferred retry transfer mode available for communicating with the target device from among the plurality of priority-ordered transfer modes, when the data communication performed by the data communication module is interrupted; and
a data communication retry module to retry at least part of the data communication using the preferred retry transfer mode.

7. The device of claim 6, wherein an order of priority of the priority-ordered transfer modes is based on a throughput of the transfer modes, a connectivity range of the transfer modes, or the throughput and the connectivity range of the transfer modes.

8. The device of claim 6, wherein the FTP mode comprises an FTP application executed by the data communication module to perform the data communication with the target device over a local network.

9. The device of claim 6, wherein the HTTP mode comprises an HTTP application executed by the data communication module to perform the data communication with the target device by way of a third-party server, mobile telecommunications, or a mobile access gateway.

10. The device of claim 6, wherein the target device is a node of a mesh network.

11. A non-transitory machine-readable medium storing instructions that, when executed by a processor, cause the processor to:
identify a preferred transfer mode available for communicating with a target device, from among a plurality of priority-ordered transfer modes that includes, in order from highest priority to lowest priority, a peer-to-peer mode, an FTP mode, and an HTTP mode, wherein said preferred transfer mode is a highest priority transfer mode tested to be available; and
perform a data communication with the target device using the preferred transfer mode,
identify a preferred retry transfer mode available for communicating with the target device, from among the plurality of priority-ordered transfer modes, when the data communication is interrupted; and
retry at least part of the data communication using the preferred retry transfer mode.

12. The non-transitory machine-readable medium of claim 11, further comprising instructions that, when executed by the processor, cause the processor to relay information from a mesh network node to the target device using the preferred transfer mode.

## Patentansprüche

1. Verfahren, das Folgendes umfasst:
Identifizieren, durch einen Prozessor, eines bevorzugten Übertragungsmodus, der zum Kommunizieren zwischen einer Quellvorrichtung und einer Zielvorrichtung verfügbar ist, aus mehreren nach Priorität geordneten Übertragungsmodi, die einen Peer-zu-Peer-Modus, einen FTP-Modus und einen HTTP-Modus umfassen, wobei der bevorzugte Übertragungsmodus ein Übertragungsmodus höchster Priorität ist, der darauf getestet wird, verfügbar zu sein; und
Durchführen einer Datenkommunikation zwischen der Quellvorrichtung und der Zielvorrichtung durch den Prozessor unter Verwendung des bevorzugten Übertragungsmodus, in einem Fall, in dem die Datenkommunikation unterbrochen wird, Identifizieren eines bevorzugten Wiederholungsübertragungsmodus durch den Prozessor, der zum Kommunizieren zwischen der Quellvorrichtung und der Zielvorrichtung verfügbar ist, aus den mehreren nach Priorität geordneten Übertragungsmodi, und Wiederholen von wenigstens einem Teil der Datenkommunikation durch den Prozessor unter Verwendung des bevorzugten Wiederholungsübertragungsmodus.

2. Verfahren nach Anspruch 1, wobei eine Prioritätsordnung der nach Priorität geordneten Übertragungsmodi von höchster Priorität zu niedrigster Priorität der Peer-zu-Peer-Modus, der FTP-Modus und der HTTP-Modus ist.

3. Verfahren nach Anspruch 1, wobei das Identifizieren Folgendes beinhaltet:
Testen der Verfügbarkeit der nach Priorität geordneten Übertragungsmodi zum Kommunizieren zwischen der Quellvorrichtung und der Zielvorrichtung, wobei die Tests für die nach Priorität geordneten Übertragungsmodi in einer Ordnung von höchster Priorität zu niedrigster Priorität nacheinander durchgeführt werden;
Auswählen eines ersten Übertragungsmodus, der bei dem Testen darauf getestet wird, verfügbar zu sein, als den bevorzugten Übertragungsmodus; und
Wiederholen des Testens in einem Fall, in dem bei dem Testen keine Übertragungsmodi darauf getestet werden, verfügbar zu sein.

4. Verfahren nach Anspruch 1, wobei das Identifizieren Folgendes beinhaltet:
gleichzeitiges Testen einer Verfügbarkeit der nach Priorität geordneten Übertragungsmodi zum Kommunizieren zwischen der Quellvorrichtung und der Zielvorrichtung;
Auswählen eines Übertragungsmodus höchster Priorität aus den bei dem Testen darauf getesteten Übertragungsmodi, verfügbar zu sein, als den bevorzugten Übertragungsmodus; und
Wiederholen des Testens in einem Fall, in dem bei dem Testen keine Übertragungsmodi darauf getestet werden, verfügbar zu sein.

5. Verfahren nach Anspruch 1, wobei die Quellvorrichtung, die Zielvorrichtung oder sowohl die Quellvorrichtung als auch die Zielvorrichtung Knoten eines Mesh-Netzwerks sind.

6. Vorrichtung, die Folgendes umfasst:
ein Übertragungsmodusidentifikationsmodul, um einen bevorzugten Übertragungsmodus, der zum Kommunizieren mit einer Zielvorrichtung verfügbar ist, aus mehreren nach Priorität geordneten Übertragungsmodi zu identifizieren, die einen Peer-zu-Peer-Modus, einen FTP-Modus und einen HTTP-Modus umfassen, wobei der bevorzugte Übertragungsmodus ein Übertragungsmodus höchster Priorität ist, der darauf getestet wird, verfügbar zu sein; und
ein Datenkommunikationsmodul, um eine Datenkommunikation mit der Zielvorrichtung unter Verwendung des bevorzugten Übertragungsmodus durchzuführen, ein Wiederholungsübertragungsmodusidentifikationsmodul, um einen bevorzugten Wiederholungsübertragungsmodus, der für die Kommunikation mit der Zielvorrichtung verfügbar ist, aus den mehreren nach Priorität geordneten Übertragungsmodi zu identifizieren, wenn die Datenkommunikation, die durch das Datenkommunikationsmodul durchgeführt wird, unterbrochen wird; und
ein Datenkommunikationswiederholungsmodul, um wenigstens einen Teil der Datenkommunikation unter Verwendung des bevorzugten Wiederholungsübertragungsmodus zu wiederholen.

7. Vorrichtung nach Anspruch 6, wobei eine Prioritätsordnung der nach Priorität geordneten Übertragungsmodi auf einem Durchsatz der Übertragungsmodi, einem Konnektivitätsbereich der Übertragungsmodi oder dem Durchsatz und dem Konnektivitätsbereich der Übertragungsmodi basiert.

8. Vorrichtung nach Anspruch 6, wobei der FTP-Modus eine FTP-Anwendung umfasst, die durch das Datenkommunikationsmodul ausgeführt wird, um die Datenkommunikation mit der Zielvorrichtung über ein lokales Netzwerk durchzuführen.

9. Vorrichtung nach Anspruch 6, wobei der HTTP-Modus eine HTTP-Anwendung umfasst, die durch das Datenkommunikationsmodul ausgeführt wird, um die Datenkommunikation mit der Zielvorrichtung über einen Server eines Drittanbieters, Mobilkommunikation oder ein Mobilzugriffs-Gateway durchzuführen.

10. Vorrichtung nach Anspruch 6, wobei die Zielvorrichtung ein Knoten eines Mesh-Netzwerks ist.

11. Nichtflüchtiges maschinenlesbares Medium, um Anweisungen zu speichern, die, wenn sie durch einen Prozessor ausgeführt werden, den Prozessor zu Folgendem veranlassen:
Identifizieren eines bevorzugten Übertragungsmodus, der zum Kommunizieren mit einer Zielvorrichtung verfügbar ist, aus mehreren nach Priorität geordneten Übertragungsmodi, die in einer Ordnung von höchster Priorität zu niedrigster Priorität einen Peer-zu-Peer-Modus, einen FTP-Modus und einen HTTP-Modus umfassen, wobei der bevorzugte Übertragungsmodus ein Übertragungsmodus höchster Priorität ist, der darauf getestet wird, verfügbar zu sein; und
Durchführen einer Datenkommunikation mit der Zielvorrichtung unter Verwendung des bevorzugten Übertragungsmodus, Identifizieren eines bevorzugten Wiederholungsübertragungsmodus, der zum Kommunizieren mit der Zielvorrichtung verfügbar ist, aus den mehreren nach Priorität geordneten Übertragungsmodi, wenn die Datenkommunikation unterbrochen wird; und
Wiederholen wenigstens eines Teils der Datenkommunikation unter Verwendung des bevorzugten Wiederholungsübertragungsmodus.

12. Nichtflüchtiges maschinenlesbares Medium nach Anspruch 11, das ferner Anweisungen umfasst, die, wenn sie durch den Prozessor ausgeführt werden, den Prozessor veranlassen, Informationen von einem Mesh-Netzwerkknoten an die Zielvorrichtung unter Verwendung des bevorzugten Übertragungsmodus weiterzuleiten.

## Revendications

1. Procédé comprenant :
l'identification, par un processeur, d'un mode de transfert préféré disponible pour communiquer entre un dispositif source et un dispositif cible, parmi une pluralité de modes de transfert par ordre de priorité qui comporte un mode pair à pair, un mode FTP et un mode HTTP, ledit mode de transfert préféré étant un mode de transfert à priorité la plus haute dont la disponibilité a été testée ; et
la réalisation, par le processeur, d'une communication de données entre le dispositif source et le dispositif cible à l'aide du mode de transfert préféré,
dans un cas où la communication de données est interrompue, l'identification, par le processeur, d'un mode de nouvelle tentative de transfert préféré disponible pour communiquer entre le dispositif source et le dispositif cible, parmi la pluralité de modes de transfert par ordre de priorité, et la nouvelle tentative, par le processeur, d'au moins une partie de la communication de données à l'aide du mode de nouvelle tentative de transfert préféré.

2. Procédé selon la revendication 1, dans lequel un ordre de priorité des modes de transfert par ordre de priorité, de la priorité la plus haute à la priorité la plus basse, est le mode pair à pair, le mode FTP et le mode HTTP.

3. Procédé selon la revendication 1, dans lequel l'identification comporte :
le test d'une disponibilité des modes de transfert par ordre de priorité pour communiquer entre le dispositif source et le dispositif cible, le test étant effectué séquentiellement sur les modes de transfert par ordre de priorité dans l'ordre de la priorité la plus haute à la priorité la plus basse ;
la sélection d'un premier mode de transfert testé comme étant disponible dans le test en tant que mode de transfert préféré ; et
la nouvelle tentative du test dans un cas où aucun mode de transfert n'est testé pour être disponible dans le test.

4. Procédé selon la revendication 1, dans lequel l'identification comporte :
le test de manière simultanée d'une disponibilité des modes de transfert par ordre de priorité pour communiquer entre le dispositif source et le dispositif cible ;
la sélection d'un mode de transfert dont la priorité est la plus haute parmi ceux testés comme étant disponibles dans le test en tant que mode de transfert préféré ; et
la nouvelle tentative du test dans un cas où aucun mode de transfert n'est testé pour être disponible dans le test

5. Procédé selon la revendication 1, dans lequel le dispositif source, le dispositif cible ou à la fois le dispositif source et le dispositif cible sont des nœuds d'un réseau maillé.

6. Dispositif comprenant :
un module d'identification de mode de transfert destiné à identifier un mode de transfert préféré disponible pour communiquer avec un dispositif cible, parmi une pluralité de modes de transfert par ordre de priorité qui comporte un mode pair à pair, un mode FTP et un mode HTTP, dans lequel ledit mode de transfert préféré est un mode de transfert ayant la priorité la plus haute dont la disponibilité a été testée ; et
un module de communication de données destiné à réaliser une communication de données avec le dispositif cible en utilisant le mode de transfert préféré,
un module d'identification de mode de nouvelle tentative de transfert pour identifier un mode de nouvelle tentative de transfert préféré disponible pour communiquer avec le dispositif cible parmi la pluralité de modes de transfert par ordre de priorité, lorsque la communication de données réalisée par le module de communication de données est interrompue ; et
un module de nouvelle tentative de communication de données pour réessayer au moins une partie de la communication de données en utilisant le mode de nouvelle tentative de transfert préféré.

7. Dispositif selon la revendication 6, dans lequel un ordre de priorité des modes de transfert par ordre de priorité est basé sur un débit des modes de transfert, une plage de connectivité des modes de transfert, ou le débit et la plage de connectivité des modes de transfert.

8. Dispositif selon la revendication 6, dans lequel le mode FTP comprend une application FTP exécutée par le module de communication de données pour effectuer la communication de données avec le dispositif cible sur un réseau local.

9. Dispositif selon la revendication 6, dans lequel le mode HTTP comprend une application HTTP exécutée par le module de communication de données pour réaliser la communication de données avec le dispositif cible au moyen d'un serveur tiers, de télécommunications mobiles ou d'une passerelle d'accès mobile.

10. Dispositif selon la revendication 6, dans lequel le dispositif cible est un nœud d'un réseau maillé.

11. Support non transitoire lisible par machine stockant des instructions qui, lorsqu'elles sont exécutées par un processeur, amènent le processeur à :
identifier un mode de transfert préféré disponible pour communiquer avec un dispositif cible, parmi une pluralité de modes de transfert par ordre de priorité qui comporte, dans l'ordre de la priorité la plus haute à la priorité la plus basse, un mode pair à pair, un mode FTP et un mode HTTP, ledit mode de transfert préféré étant un mode de transfert à priorité la plus haute dont la disponibilité a été testée ; et
réaliser une communication de données avec le dispositif cible en utilisant le mode de transfert préféré,
identifier un mode de nouvelle tentative de transfert préféré disponible pour communiquer avec le dispositif cible, parmi la pluralité de modes de transfert par ordre de priorité, lorsque la communication de données est interrompue ; et
réessayer au moins une partie de la communication de données en utilisant le mode de nouvelle tentative de transfert préféré.

12. Support non transitoire lisible par machine selon la revendication 11, comprenant en outre des instructions qui, lorsqu'elles sont exécutées par le processeur, amènent le processeur à relayer des informations depuis un nœud de réseau maillé vers le dispositif cible en utilisant le mode de transfert préféré.
